# FASCICULE DE BREVET EUROPEEN

(11) **EP 3 420 325 B1**
(45) Date de publication et mention de la délivrance du brevet: **28.09.2022**
(21) Numéro de dépôt: 17705673.6
(22) Date de dépôt: 22.02.2017
(51) Int. Cl.: G01J 3/02, G01J 3/08

(54) **SYSTEME DE SPECTROSCOPIE ET D'IMAGERIE**
SYSTEM ZUM ERHALTEN EINES SPEKTRUMS UND BILDGEBUNG
SYSTEM FOR OBTAINING A SPECTRUM AND IMAGING

(30) Priorité: 25.02.2016 FR 1651538
(43) Date de publication de la demande: 02.01.2019
(73) Titulaire: Centre National de la Recherche Scientifique, 75016 Paris (FR); Université Paris 1, 75231 Paris (FR)
(72) Inventeur: GOSSELIN, Renaud, 75014 Paris (FR)
(74) Mandataire: IPAZ
(86) Numéro de dépôt international: PCT/EP2017/054052
(87) Numéro de publication internationale: WO 2017/144528

(56) Documents cités:
- WO-A1-2008/048137
- US-A- 5 880 834
- US-B2- 8 537 343

## Description

Le domaine de l'invention est celui de la spectroscopie et de l'imagerie d'un objet.

Parmi les disciplines scientifiques qui peuvent avoir recours à la spectroscopie associée à l'imagerie on peut citer l'archéologie et en particulier l'analyse élémentaire de la surface des matériaux anciens et des traces d'usure qui s'y rencontrent, l'astronomie, la chimie, la géologie, etc. Les instruments qui aujourd'hui, permettent l'étude d'objets tout à la fois en observation directe et en spectroscopie sont des instruments complexes, assez volumineux et onéreux.

Quand on s'intéresse à la composition élémentaire de la surface des objets, les deux types d'observation microscopique et spectroscopique peuvent se faire au moyen d'instruments qui sont chacun dédiés à un usage particulier ou au moyen d'instruments qui permettent de combiner les deux modes d'observation.

Dans le cas de la double instrumentation, l'analyse spectroscopique est assurée par un matériel souvent portable, bon marché mais qui n'est généralement pas optimisé pour un travail en conjonction avec un microscope. La localisation de la surface analysée est alors moins précise et il peut s'avérer nécessaire de manipuler plusieurs instruments afin d'enregistrer à la fois un signal optique vidéo représentatif de l'image de l'objet et son signal spectroscopique.

Dans le cas d'un instrument unique qui associe les fonctions de spectroscopie et de microscopie, il s'agit alors d'une solution coûteuse dont la partie spectroscopie ne s'adapte qu'à un seul type de microscope.

En conséquence, il demeure à ce jour un besoin pour un système permettant de basculer aisément entre les deux modes d'observation optique (optique géométrique) et spectroscopique et donnant simultanément satisfaction à l'ensemble des exigences précitées, en termes de coût, de facilité d'utilisation et d'intégration à différents équipements existants.

Plus précisément l'invention a pour objet un système de spectroscopie et d'imagerie selon la revendication 1.

Le système selon l'invention est donc composé pour l'essentiel, d'un boîtier ou "chambre" de forme polygonale qui repose sur un axe circulaire autour duquel il pivote. Selon la position de la chambre autour de son axe, il est possible d'observer : soit l'image directe d'un objet, soit le spectre de lumière réfléchi ou transmis par ce même objet. Le dispositif permet de permuter rapidement entre mode "imagerie optique" et mode "spectroscopie", sans recourir à deux types d'instruments différents.

Selon une caractéristique de l'invention, un capteur de spectroscopie et un capteur d'imagerie sont un même capteur équipé d'un mécanisme de rotation du capteur sur lui-même, apte à orienter le capteur :
- vers l'extérieur du boîtier pour assurer la fonction d'imagerie, et
- vers le dispositif de diffraction pour assurer la fonction de spectroscopie.

Le dispositif de diffraction peut comporter un réseau de diffraction ou un prisme.

Selon une autre caractéristique de l'invention, le boîtier comporte une autre fente disposée dans un autre côté et associée audit dispositif de diffraction, et un autre capteur de spectroscopie destiné à capter le spectre de diffraction issu du dispositif de diffraction associé à l'autre fente. De préférence, le dispositif de diffraction est fixe et les côtés du boîtier sont équilatéraux.

Eventuellement, un côté à fente comporte une ouverture et le boîtier comporte une plaque à fente amovible disposée d'un côté ou de l'autre de cette ouverture.

Le mécanisme de rotation du boîtier peut-être manuel ou motorisé.

L'invention a aussi pour objet un équipement de spectroscopie et d'imagerie qui comporte un système de spectroscopie et d'imagerie tel que décrit, fixé à un microscope ou une lunette astronomique ou une caméra vidéo.

D'autres caractéristiques et avantages de l'invention apparaîtront à la lecture de la description détaillée qui suit, faite à titre d'exemple non limitatif et en référence aux dessins annexés dans lesquels :
la figure 1 représente schématiquement une vue en éclaté d'un exemple de boîtier utilisé dans le système selon l'invention,
la figure 2 illustre schématiquement le fonctionnement d'un exemple de système selon l'invention en mode vidéo et en mode spectroscopie.

D'une figure à l'autre, les mêmes éléments sont repérés par les mêmes références.

Dans la suite de la description, les expressions « haut », « bas », ..., sont utilisées en référence à l'orientation des figures décrites. Dans la mesure où le système peut être positionné selon d'autres orientations, la terminologie directionnelle est indiquée à titre d'illustration et n'est pas limitative.

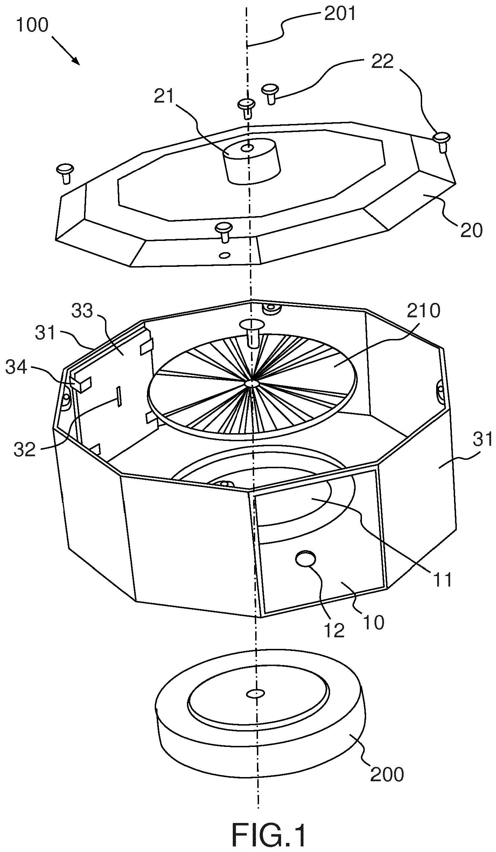

Un exemple de système de spectroscopie et d'imagerie d'un objet selon l'invention est décrit en relation avec la figure 1. Il comporte :
- Un boîtier 100 polygonal qui comporte une face inférieure 10, une face supérieure 20 et au moins 4 (de préférence au moins 6) côtés (ou parois) verticaux 31 reliant les deux faces, dont un côté 31 avec une fente 32 destinée à laisser passer un faisceau de lumière provenant de l'objet. La fente peut être pratiquée directement dans un côté généralement en son centre. Du fait de la rotation du boîtier autour de l'axe 201, ces côtés 31 sont avantageusement équilatéraux pour des raisons notamment de facilité de fabrication et d'utilisation.

Lorsque l'on souhaite pouvoir disposer d'une autre forme de fente, cette autre fente peut être disposée dans un autre côté et associée audit dispositif de diffraction. Selon une alternative, on pratique dans le côté une ouverture devant laquelle on place une plaque amovible 33 qui comporte la fente 32, en changeant de plaque et donc de forme de fente au gré des besoins. La plaque est placée d'un côté ou de l'autre de l'ouverture par exemple au moyen d'une série de crochets 34 plats en "L" ou de rails, qui permettent d'insérer et de maintenir en place une plaque 33 dont les dimensions sont pratiquement égales à celles d'un côté.

Le boîtier est doté d'un couvercle 20 formant la face supérieure du boitier pour assurer son étanchéité lumineuse lorsque le système est en fonctionnement. Ce couvercle est de préférence amovible pour permettre d'accéder à l'intérieur du boîtier afin d'y placer différents composants optiques. Ce couvercle 20 est associé au boîtier à l'aide de vis 22 (ou tout autre système de fixation). Il est pourvu par exemple en son centre, d'un bouton de préhension 21 utilisé :
- pour mettre ou retirer le couvercle lorsque le couvercle est amovible, et/ou
- pour établir une sorte de pont thermique entre l'intérieur et l'extérieur du boîtier afin d'évacuer la chaleur, et/ou
- éventuellement comme élément du mécanisme de rotation du boîtier comme on le verra plus loin.

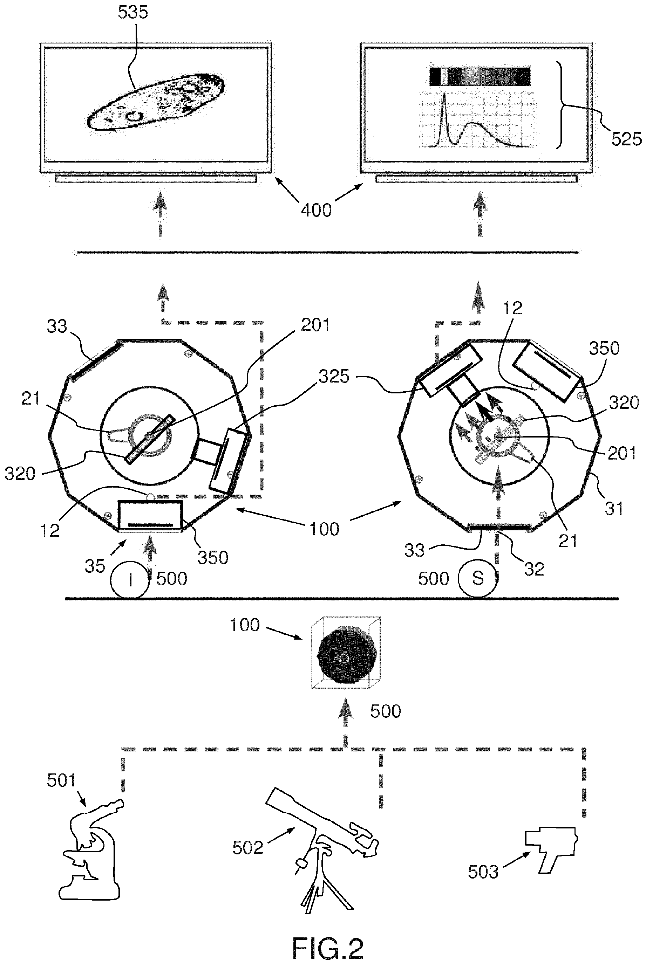

Le boîtier présente une ouverture circulaire 11 au centre de sa face inférieure 10 permettant de l'enchâsser sur un socle fixe 200 lui aussi circulaire pour autoriser la rotation du boîtier autour d'un axe de rotation 201 passant par le centre du couvercle 20, le centre de l'ouverture circulaire 11 et le centre du socle fixe 200.
- Comme on peut le voir figure 2, dans ce boîtier sont placés :
   ∘ un (ou plusieurs) capteur(s) d'imagerie 350 (capteur CCD par exemple), chaque capteur étant disposé devant une ouverture 35 pratiquée dans un côté du boîtier, de manière à capter l'image (ou les images) vidéo de l'objet. Chaque capteur vidéo est donc orienté vers l'extérieur du boîtier. Un trou 12 peut être pratiqué dans la face inférieure de la chambre afin de laisser un passage au câblage du capteur (fil d'alimentation, câble vidéo).
   ∘ un dispositif de diffraction 320 associé à la fente 32. Ce dispositif de diffraction qui peut être fixe lorsque le boîtier subit une rotation autour de l'axe 201 comme on peut le voir figure 2 (partie du milieu), comporte typiquement un prisme ou un réseau de diffraction disposé de manière à recevoir les rayons émis par l'objet et ayant traversé la fente.
   ∘ un capteur de spectroscopie 325 destiné à capter le spectre de diffraction de l'objet, issu du dispositif de diffraction 320 associé à la fente 32. Le capteur de spectroscopie est donc orienté vers le dispositif de diffraction. Plusieurs capteurs de spectroscopie peuvent être installés dans le boîtier. Ils peuvent notamment être installés contre les côtés du boîtier. Dans le cas où le boîtier comporte plusieurs capteurs de spectroscopie et où le dispositif de diffraction est fixe, les côtés du boîtier sont avantageusement équilatéraux de manière à ce que l'angle entre le dispositif de diffraction et chaque capteur de spectroscopie soit le même.

Les dimensions des capteurs déterminent généralement les dimensions des côtés du boîtier.

Les capteurs vidéo 350 et de spectroscopie 325 sont reliés à une unité de traitement 400. On peut utiliser plusieurs capteurs vidéo et/ou de spectroscopie, respectivement sensibles à différents domaines de longueur d'onde (UV, visible, IR), ou de résolutions différentes.

Selon un mode de réalisation particulier, un capteur de spectroscopie et un capteur d'imagerie forment un même capteur équipé d'un mécanisme de rotation du capteur sur lui-même, apte à orienter le capteur vers l'extérieur du boîtier pour assurer la fonction d'imagerie et vers le dispositif de diffraction pour assurer la fonction de spectroscopie.

Les parois verticales du boîtier comportent donc au minimum deux ouvertures : au moins une fente 32 et au moins une autre ouverture 35 devant laquelle est positionné un capteur vidéo 350, à raison d'une ouverture par capteur vidéo.
- Un mécanisme de rotation du boîtier apte à orienter :
   - chaque capteur d'imagerie 350 vers l'objet pour positionner le système en mode vidéo (= mode acquisition d'une ou plusieurs images de l'objet), et
   - le côté 31 à fente 32 vers l'objet pour positionner le système en mode spectroscopie.

L'axe sur lequel est enchâssé le boîtier est par exemple un socle 200. Le diamètre de ce socle est supérieur à celui de l'ouverture circulaire 11 du boitier dans la partie extérieure à la chambre, mais inférieur à l'ouverture du boîtier dans la partie qui se situe à l'intérieur de celui-ci. Une plaque 210 circulaire fixe ainsi qu'une vis permettent d'associer le socle 200 au boîtier 100 tout en autorisant la rotation du boîtier autour du socle fixe et de cette plaque fixe.

Dans l'exemple de réalisation tel que montré sur les figures, le bouton 21 de préhension du couvercle est utilisé pour faire pivoter manuellement le boîtier autour de son axe 200. Ainsi tourner le bouton suffit pour basculer d'un mode de fonctionnement (spectroscopie ou vidéo avec éventuellement plusieurs modes vidéo) à l'autre. Bien sûr tout autre dispositif de rotation du boîtier sur un axe de rotation peut être envisagé, éventuellement sans qu'il soit nécessaire de pratiquer une ouverture dans la face inférieure du boîtier.

La rotation du boîtier peut aussi être assurée par une motorisation avantageusement programmée par l'unité de traitement pour positionner le boîtier en fonction du mode de fonctionnement choisi.

La figure 2 divisée en 3 parties (bas, milieu, haut) illustre le fonctionnement du système en mode vidéo (I) et en mode spectroscopie (S).

On voit dans la 1^{ère} partie (en bas) que l'objet 500 à analyser peut être lui-même une image d'un objet formée par un instrument de formation d'images tel qu'un microscope 501 ou une lunette astronomique 502 ou une caméra vidéo 503, sur lequel est positionné le boîtier 100 de manière à présenter ses côtés vers l'objet 500. Le boîtier est par exemple positionné sur l'instrument par un moyen de fixation solidaire du socle du boîtier.

En mode imagerie I, le boîtier (vu de dessus dans la 2è partie (du milieu)) est positionné de manière à présenter le capteur vidéo 350 face à l'objet 500. L'image captée 535 est transmise à l'unité de traitement 400 notamment pour être affichée, comme montré dans la 3è partie (en haut).

En mode spectroscopie S, le boîtier (vu de dessus dans la 2è partie (au milieu)) est positionné de manière à présenter la fente 32 face à l'objet 500. Les rayons issus de l'objet 500 et ayant traversé la fente 32 sont diffractés par le dispositif de diffraction 320 pour former un spectre de diffraction sur le capteur de spectroscopie 325. Le spectre 525 est transmis à l'unité de traitement 400 notamment pour être affiché comme montré dans la 3è partie (en haut) sous deux formes.

Le système selon l'invention permet ainsi de passer très simplement et très rapidement de l'observation directe (optique) d'un objet à l'observation du spectre de lumière qui est réfléchi ou transmis par ce même objet. Le changement du mode d'observation de l'objet est réalisé sans qu'il soit nécessaire de recourir à deux types d'instruments différents.

## Revendications

1. Système de spectroscopie et d'imagerie d'un objet (500) qui comporte :
- un boîtier (100) polygonal comportant une face inférieure (10), une face supérieure (20) et au moins quatre côtés verticaux (31) reliant les deux faces dont un côté avec une fente (32), dans lequel sont placés :
∘ au moins un capteur d'imagerie (350), chaque capteur d'imagerie étant disposé devant une ouverture (35) pratiquée dans un côté,
∘ un dispositif de diffraction (320) associé à la fente,
∘ un capteur de spectroscopie (325) destiné à capter le spectre de diffraction de l'objet, issu du dispositif de diffraction associé à la fente,
- un socle (200) sur lequel le boîtier polygonal est enchâssé et autour duquel le boîtier est apte à pivoter,
- un mécanisme (21, 210, 200) de rotation du boîtier apte à orienter chaque capteur d'imagerie vers l'objet, et apte à orienter la fente vers ledit objet, permettant ainsi de permuter entre un mode d'imagerie optique et un mode d'imagerie spectroscopique.

2. Système de spectroscopie et d'imagerie selon la revendication précédente, **caractérisé en ce qu'**un capteur de spectroscopie et un capteur d'imagerie sont un même capteur équipé d'un mécanisme de rotation du capteur sur lui-même, apte à orienter ce même capteur vers l'extérieur du boîtier pour assurer la fonction d'imagerie et vers le dispositif de diffraction pour assurer la fonction de spectroscopie.

3. Système de spectroscopie et d'imagerie selon l'une des revendications précédentes, **caractérisé en ce que** le dispositif de diffraction (320) comporte un réseau de diffraction ou un prisme.

4. Système de spectroscopie et d'imagerie selon l'une des revendications précédentes, **caractérisé en ce que** le boîtier comporte une autre fente disposée dans un autre côté et associée audit dispositif de diffraction, et un autre capteur de spectroscopie destiné à capter le spectre de diffraction issu du dispositif de diffraction associé à l'autre fente.

5. Système de spectroscopie et d'imagerie selon la revendication précédente, **caractérisé en ce que** les côtés (31) du boîtier sont équilatéraux et **en ce que** le dispositif de diffraction (320) est fixe.

6. Système de spectroscopie et d'imagerie selon l'une des revendications précédentes, **caractérisé en ce qu'**au moins un côté à fente comporte une ouverture et **en ce que** le boîtier comporte une plaque à fente amovible (33) disposée d'un côté ou de l'autre de cette ouverture.

7. Système de spectroscopie et d'imagerie selon l'une des revendications précédentes, **caractérisé en ce que** le capteur d'imagerie et/ou de spectroscopie est un capteur UV ou visible ou IR.

8. Système de spectroscopie et d'imagerie selon l'une des revendications précédentes, **caractérisé en ce que** le mécanisme de rotation du boîtier est manuel ou motorisé.

9. Equipement de spectroscopie et d'imagerie qui comporte un système de spectroscopie et d'imagerie selon l'une des revendications précédentes, fixé à un microscope (501) ou une lunette astronomique (502) ou une caméra vidéo (503).

## Patentansprüche

1. System zur Spektroskopie und Abbildung eines Objekts (500), das das Folgende umfasst:
- ein polygonales Gehäuse (100) mit einer Unterseite (10), einer Oberseite (20) und mindestens vier vertikalen Seiten (31), die die beiden Seiten verbinden, von denen eine Seite mit einem Schlitz (32) versehen ist, in dem das Folgende angeordnet ist:
∘ mindestens ein Abbildungssensor (350), wobei jeder Abbildungssensor vor einer Öffnung (35) in einer Seite angeordnet ist,
∘ eine Beugungsvorrichtung (320), die mit dem Schlitz verbunden ist,
∘ ein Spektroskopie-Sensor (325) zum Erfassen des Beugungsspektrums des Objekts, das von der dem Schlitz zugeordneten Beugungsvorrichtung stammt,
- einen Sockel (200), auf dem das polygonale Gehäuse eingefasst ist und um den das Gehäuse schwenkbar ist,
- einen Mechanismus (21, 210, 200) zum Drehen des Gehäuses, der geeignet ist, jeden Abbildungssensor auf das Objekt auszurichten, und der geeignet ist, den Schlitz auf das Objekt auszurichten, wodurch ein Wechsel zwischen einem optischen Abbildungsmodus und einem spektroskopischen Abbildungsmodus ermöglicht wird.

2. Spektroskopie- und Abbildungssystem nach dem vorhergehenden Anspruch, **dadurch gekennzeichnet, dass** ein Spektroskopie-Sensor und ein Abbildungssensor ein und derselbe Sensor sind, der mit einem Mechanismus zur Drehung des Sensors um sich selbst ausgestattet ist, der geeignet ist, denselben Sensor zum Äußeren des Gehäuses hin auszurichten, um die Abbildungsfunktion zu gewährleisten, und zur Beugungsvorrichtung hin, um die Spektroskopiefunktion zu gewährleisten.

3. Spektroskopie- und Abbildungssystem nach einem der vorhergehenden Ansprüche, **dadurch gekennzeichnet, dass** die Beugungsvorrichtung (320) ein Beugungsgitter oder ein Prisma umfasst.

4. Spektroskopie- und Abbildungssystem nach einem der vorhergehenden Ansprüche, **dadurch gekennzeichnet, dass** das Gehäuse einen weiteren Schlitz, der in einer anderen Seite angeordnet und mit der Beugungsvorrichtung verbunden ist, und einen weiteren Spektroskopie-Sensor zum Erfassen des Beugungsspektrums aus der Beugungsvorrichtung, die mit dem anderen Schlitz verbunden ist, aufweist.

5. Spektroskopie- und Abbildungssystem nach dem vorhergehenden Anspruch, **dadurch gekennzeichnet, dass** die Seiten (31) des Gehäuses gleichseitig sind und dass die Beugungsvorrichtung (320) feststehend ist.

6. Spektroskopie- und Abbildungssystem nach einem der vorhergehenden Ansprüche, **dadurch gekennzeichnet, dass** mindestens eine Schlitzseite eine Öffnung aufweist und dass das Gehäuse eine abnehmbare Schlitzplatte (33) aufweist, die auf einer Seite oder der anderen Seite dieser Öffnung angeordnet ist.

7. Spektroskopie- und Abbildungssystem nach einem der vorhergehenden Ansprüche, **dadurch gekennzeichnet, dass** der Abbildungs- und/oder Spektroskopie-Sensor ein UV- oder IR-Sensor oder ein Sensor für sichtbares Licht ist.

8. Spektroskopie- und Abbildungssystem nach einem der vorhergehenden Ansprüche, **dadurch gekennzeichnet, dass** der Mechanismus zur Drehung des Gehäuses ein manueller oder ein motorisch angetriebener ist.

9. Spektroskopie- und Bildgebungsausrüstung, die ein Spektroskopie- und Bildgebungssystem nach einem der vorhergehenden Ansprüche umfasst, das an einem Mikroskop (501) oder einem astronomischen Fernrohr (502) oder einer Videokamera (503) befestigt ist.

## Claims

1. System for spectroscopy and imaging of an object (500) which includes:
- a polygonal casing (100) including a lower face (10), an upper face (20) and at least four vertical sides (31) joining the two faces including a side with a slit (32), in which are placed:
∘ at least one imaging sensor (350), each imaging sensor being arranged in front of an aperture (35) made in one side,
∘ a diffraction device (320) associated with the slit,
∘ a spectroscopy sensor (325) intended to capture the diffraction spectrum of the object originating from the diffraction device associated with the slit,
- a base (200) on which the polygonal casing is set and around which the casing is capable of pivoting,
- a mechanism (21, 210, 200) for rotating the casing capable of orientating each imaging sensor towards the object, and capable of orientating the slit towards said object, thus making it possible to switch between an optical imaging mode and a spectroscopic imaging mode.

2. System for spectroscopy and imaging according to the preceding claim, **characterized in that** a spectroscopy sensor and an imaging sensor are one and the same sensor equipped with a mechanism for rotating the sensor around itself, capable of orientating this same sensor towards the outside of the casing in order to ensure the imaging function and towards the diffraction device in order to ensure the spectroscopy function.

3. System for spectroscopy and imaging according to one of the preceding claims, **characterized in that** the diffraction device (320) includes a diffraction grating or a prism.

4. System for spectroscopy and imaging according to one of the preceding claims, **characterized in that** the casing includes another slit arranged in another side and associated with said diffraction device, and another spectroscopy sensor intended to capture the diffraction spectrum originating from the diffraction device associated with the other slit.

5. System for spectroscopy and imaging according to the preceding claim, **characterized in that** the sides (31) of the casing are equilateral and **in that** the diffraction device (320) is fixed.

6. System for spectroscopy and imaging according to one of the preceding claims, **characterized in that** at least one side having a slit includes an aperture and **in that** the casing includes a detachable slit plate (33) arranged on one side or the other of this aperture.

7. System for spectroscopy and imaging according to one of the preceding claims, **characterized in that** the imaging and/or spectroscopy sensor is a UV or visible or IR sensor.

8. System for spectroscopy and imaging according to one of the preceding claims, **characterized in that** the mechanism for rotating the casing is manual or motorized.

9. Equipment for spectroscopy and imaging which includes a system for spectroscopy and imaging according to one of the preceding claims, fixed to a microscope (501) or an astronomical telescope (502) or a video camera (503).
